Europäisches Patentamt

European Patent Office

Office européen des brevets

(11) Veröffentlichungsnummer: **0 001 639**
A1

## EUROPÄISCHE PATENTANMELDUNG

(21) Anmeldenummer: 78101191.1

(22) Anmeldetag: 21.10.78

(51) Int. Cl.²: **C 08 J 9/00**

(30) Priorität: 26.10.77 US 845829

(43) Veröffentlichungstag der Anmeldung:
02.05.79 Patentblatt 79 9

(84) Benannte Vertragsstaaten:
BE CH DE FR GB LU NL SE

(71) Anmelder: Cromer, William C
3919 Crest Hill Road
Chester,Virginia 23831(US)

(72) Erfinder: Cromer, William C
3919 Crest Hill Road
Chester,Virginia 23831(US)

(74) Vertreter: Wolff, Hans Joachim, Dr. et al,
Beil, Wolff & Beil Rechtsanwälte Adelonstrasse 58
Postfach 80 01 40
D-6230 Frankfurt Main-Hoechst(DE)

(54) Formkörper auf der Grundlage von Furanharzen in kompakter oder verschäumter Form, Verfahren zu ihrer Herstellung und ihre Verwendung.

(57) Es werden Formkörper auf der Grundlage von Furanharzen in kompakter oder verschäumter Form bereitgestellt, die erhalten werden durch inniges Vermischen eines oder mehrerer Monomerer, die mindestens teilweise einen Furanring enthalten, mit einem sauren Härtungsmittel und einem oder mehreren Abfallprodukten, die nicht mehr verwendbare Endprodukte chemischer oder technischer Verfahren oder Verwitterungsprodukte darstellen, sowie gegebenenfalls feinteiligem Aluminium, Magnesium, Schwermetall oder Glas als Treibmittelbestandteil.

Zur Herstellung des Formkörpers in verschäumter Form kann ein Überschuß des mindestens teilweise einen Furanring enthaltenden Monomeren gegenüber dem sauren Härtungsmittel verwendet oder vor dem Härten feinteiliges Aluminium, Magnesium oder Schwermetall oder Glas zugesetzt werden. Die Formkörper können als Isoliermaterial, Beseitigungsmittel oder Schutzummantelung für gefährliche Abfallstoffe oder als Baustoffe verwendet werden.

0001639

- 1 -

24. Jan. 1979

Unsere Nr. 22 092

Ec/br

William C. Cromer
Chester, Virginia, V.St.A.

Formkörper auf der Grundlage von Furanharzen in kompakter oder verschäumter Form, Verfahren zu ihrer Herstellung und ihre Verwendung.

Die Erfindung betrifft Formkörper auf der Grundlage von
Furanharzen in kompakter oder verschäumter Form, erhalten
durch inniges Vermischen eines oder mehrerer Monomerer,
die mindestens teilweise einen Furanring enthalten, mit
einem sauren Härtungsmittel und einem oder mehreren Abfallprodukten, die nicht mehr verwendbare Endprodukte
chemischer oder technischer Verfahren oder Verwitterungsprodukte darstellen, sowie gegebenenfalls feinteiligem
Aluminium, Magnesium, Schwermetall oder Glas als Treibmittelbestandteil, Verfahren zur Herstellung dieser
Formkörper und ihre Verwendung.

Es sind bereits die verschiedensten Furanharztypen, z.B.
Kondensations- und Polymerisationsprodukte aus Furfurylalkohol, Mischkondensationsprodukte aus Furfurylalkohol
und Furfurol, polymere Etherverbindungen, die durch Kondensation von Furfurylalkohol mit anderen Verbindungen,
die aktive Hydroxylgruppen enthalten, gebildet werden,
oder Kondensationsprodukte aus Furfurol und Phenol bekannt. Diese Furanharze werden über Polymerisations-
und Kondensationsvorgänge unter Einwirkung starker Säuren als Härtungsmittel gebildet und ergeben mit oder
ohne Füllstoffe, wie z.B. Asbest, Kreide, Glasfasern
oder Kieselgur, kalthärtende Klebstoffe und Kitte oder
auch Formen und Kerne für den Metallguß.

Es sind auch bereits verschäumte Furanharze bekannt.So beschreibt die US-PS 3 390 107 die Herstellung eines Furanhartschaumes durch Expandieren eines vorgeformten flüssigen Furanharzes bestimmter Viskosität in Gegenwart eines
sauren Katalysators und eines Treibmittels.Als Treibmittel sind unter Druck stehende inerte Gase,Trichlortrifluorethan, Natriumbicarbonat, Azoisobutyronitril und
Toluoldisulfurylcarbamat genannt. Aus der US-PS 3 975 319
ist ein Furanschaumstoff bekannt,der durch Polymerisation
eines Gemisches aus freiem Furfurylalkohol,10 bis 75 %
Furfurylalkoholharz und 10 bis 80% eines Harnstoff-Formaldehyd-Furfurylalkoholharzes,dem bis zu 100% Füllstoff zugesetzt werden können,in Gegenwart eines stark sauren
Katalysators und eines Treibmittels erhalten wird. Der
Füllstoff kann mit mindestens einem der Bestandteile des
Gemisches reaktionsfähig sein. Beispiele für derartige
Füllstoffe sind Ammoniumligninsulfat, Ruß, Puderzucker,
Holzmehl oder Kartoffelmehl. Bevorzugte Füllstoffe enthalten Hydroxyl- und/oder Carbonylgruppen.

Die erfindungsgemäßen Formkörper weisen sehr gute Isolier- und Bindeeigenschaften sowie eine hohe Lösungsmittelbeständigkeit auf und sind nicht brennbar und nicht
durch radioaktive Strahlung angreifbar. Sie können z.B.
als Strukturelemente, Wärme- oder elektrische Isoliermaterialien, Beseitigungsmittel für gefährliche Abfallstoffe, als Baustoffe im Straßen-, Wohnungs- oder Schiffbau
oder auch zur Glasfaserverstärkung oder Oberflächenbeschichtung verwendet werden. Besondere Bedeutung erhält
die vorliegende Erfindung dadurch, daß ihre Produkte und
das Verfahren gegebenenfalls gefährliche feste Abfall-

- 3 -

0001639

stoffe verarbeiten können, die für die Öffentlichkeit ein Beseitigungsproblem darstellen, und die Umwelt somit vor den schädlichen Wirkungen dieser gefährlichen Stoffe geschützt wird.

Im Hinblick auf die begrenzten Energiequellen, die derzeit zugänglich sind, wird besonderer Wert darauf gelegt, die Verwendung von Energie auf ein Minimum herabzusetzen. Bereiche, in denen Energie verwendet wird, sind z.B. solche, in denen aus verschiedenen Produkten Wärme, Elektrizität usw. gebildet wird, oder auch die Energieversorgung in Wohnungen und verschiedenen Handelsbetrieben. Die Erhaltung dieser Energieversorgung ist kritisch für die Aufrechterhaltung des gewünschten Wirtschaftswachstums in jedem Industrieland.

Es wäre eine sehr wirksame Ausnutzung von Energiequellen und daher eine wesentliche Energieerhaltung, wenn es möglich wäre, brauchbare energiesparende Produkte unter Verwendung leicht zugänglicher Abfallstoffe, insbesondere solcher Abfallstoffe, die ernste Beseitigungsprobleme mit sich bringen, herzustellen. Im erfindungsgemäßen Verfahren wird die bei der Kondensation auftretende Wärmeenergie ausgenutzt, um die Abfallprodukte zur Reaktion zu bringen, sei es quantitativ, teilweise oder nur oberflächlich.

Zu den Abfallprodukten, die unsere Umwelt überlasten, gehören Flugasche, die gegenwärtig in Mengen von 100 000 t pro Tag produziert wird, gebrauchte Gummireifen, die millionenfach in ungeheuren Haufen weggeworfen werden, sowie Kohlenabfälle, die solche Teile der verworfenen kohlearmen Stoffe umfassen, die nach üblichem Abbau und Aufarbeitung der Kohle zurückbleiben. Ein Zurückführen dieser Abfallprodukte zu einem wirksamen und praktischen Gebrauch würde eine wesentliche Energieersparnis darstellen. Wenn man dann aber noch in der Lage ist, derartige Abfallprodukte zu einem energieerhaltenden Isolierprodukt zu verarbeiten, so wird der Wert dieser

Fähigkeit noch wesentlich vergrößert . Der gegenwärtige Stand der Technik ist nicht in der Lage, dieses Ziel zu erreichen.

Darüberhinaus gibt es viele gefährliche Abfallstoffe, zu denen das Biocid Kepone[R] (Decachlor-octahydro-1,3,4-metheno-2H-cyclobuta-/c̄,d̄7-pentalen-2-on), polychlorierte Biphenyle u. dgl. gehören, die ein besonderes Beseitigungsproblem mit sich bringen. Diese Stoffe können weder auf einfache Weise sicher transportiert werden, noch kann man sie leicht beseitigen, ohne große Sorgfalt darauf zu verwenden, daß man die Umwelt nicht verschmutzt. Die gegenwärtigen Beseitigungsverfahren erfordern, daß man diese gefährlichen Abfallstoffe zu einem Beseitigungsstandort transportiert, um sie zu vergraben oder zu veraschen bzw. zu verbrennen. Der einfache Vorgang des Transportierens dieser gefährlichen Produkte bringt jedoch für die umliegende Umwelt Schwierigkeiten mit sich, die bisher noch nicht zur Zufriedenheit gelöst werden konnten.

Die Erfindung betrifft Formkörper in kompakter oder verschäumter Form, die Abfallprodukte, die nicht mehr verwendbare Endprodukte chemischer oder technischer Verfahren oder Verwitterungsprodukte darstellen, beispielsweise gefährliche Abfallprodukte, enthalten. Diese Abfallprodukte werden durch das erfindungsgemäße Verfahren in eine wiederverwendbare oder in eine ungefährliche transportier- und lagerfähige Form gebracht. Dazu werden sie mit einem oder mehreren Monomeren, die mindestens teilweise einen Furanring enthalten, und einem sauren Härtungsmittel als Reaktionspartner vermischt, wobei ein verfestigtes Harzprodukt erhalten wird. Als einen Furanring enthaltende Monomere werden vorzugsweise Furfurylalkohol, Tetrahydrofurfurylalkohol, Furfural und/oder Tetrahydrofurfural verwendet. Als saures Härtungsmittel können Säuren und Säure bildende Stoffe eingesetzt werden. Zur Bildung des Harzes können auch Comonomere, beispielsweise Aldehyde, Phenole oder Ketone, in die Lösung oder in das Gemisch eingearbeitet werden. Das Produkt kann auch verschäumt werden, um einen Schaumstcff zu erhalten, wozu das oder die Monomeren, die mindestens einen Furanring enthalten, im Überschuß gegenüber dem sauren Härtungsmittel verwendet werden können oder als mit der Säure zusammenwirkender Treibmittelbestandteil feinteiliges Aluminium, Magnesium oder Schwermetall oder aucn Glas oder auch ein bekanntes Treibmittel in das Gemisch eingearbeitet werden kann, bevor es gehärtet wird, um den Schaumstoff herzustellen.

Wenn gemäß der Erfindung ein Schaumstoff hergestellt werden soll, so werden zuerst das Abfallprodukt oder die Abfallprodukte und das Härtungsmittel zu einem ersten Gemisch vermischt, anschließend wird ein zweites Gemisch gebildet, indem man das erste Gemisch mit einer zur Härtung des Gemisches ausreichenden Menge eines oder mehrerer Monomerer, die mindestens teilweise einen Furanring enthalten, versetzt, wobei gegebenenfalls vor dem Härten des Gemisches als Treibmittelbestandteil feinteiliges Aluminium, Magnesium, Schwermetall oder Glas zugesetzt wird, um das zweite Gemisch zu verschäumen.Wenn das Monomere im Molüberschuß gegenüber dem sauren Härtungsmittel verwendet wird, ist kein weiterer Treibmittelbestandteil erforderlich. Anschließend wird das zweite Gemisch unter B_ildung vieler Zellen verschäumt und zu einem gehärteten verschäumten Formkörper geformt. Als Abfallprodukte, die in wiederverwendbare Produkte umgewandelt werden sollen, können wahlweise verschiedene Abfallstoffe, wie z.B. Flugasche, Lavaasche, Kohlenstaub, zerkleinertes Gummi, zerkleinerte Kohlerückstände oder Gips, verwendet werden.

Der Formkörper der vorliegenden Erfindung enthält als Ausgangsstoffe allgemein neben dem Abfallprodukt ein oder mehrere einen Furanring enthaltende Monomere, gegebenenfalls zusammen mit einem Comonomeren, sowie ein
saures Härtungsmittel.

Als ein einen Furanring enthaltendes Monomer kann jede
Verbindung eingesetzt werden, die allgemein als Furanpolymere oder Furanharze ergebende Verbindung bekannt
ist. Darunter werden bekanntlich in erster Linie Furfurylalkohol und Furfural verstanden. Der hier verwendete
Ausdruck "einen Furanring enthaltendes Monomer" soll alle
Stoffe einschließlich der bevorzugten Furfural und
Furfurylalkohol, sowie auch von Gemischen aus Furfurylverbindungen und Pentosen und/oder Hexosen umfassen,
die in der Lage sind, Furanpolymere oder Furanharze
zu produzieren. Die Furanharze oder Furanpolymeren, die
durch Kondensation gebildet werden, umfassen auch Comonomere, wie z.B. gesättigte oder ungesättigte Aldehyde oder auch Aldehyde abspaltende Verbindungen, insbesondere Formaldehyd, Phenole und Ketone, wie z.B. Aceton, die alle als Comonomere zur Kondensation von einen
Furanring enthaltenden Monomeren bekannt sind.

Zu den sauren Härtungsmitteln, die typischerweise zum
Härten der von einen Furanring enthaltenden Monomeren
abgeleiteten Kondensationsprodukte eingesetzt werden,
gehören Säuren und Säure bildende Stoffe. Beispiele für
diese Härtungsmittel sind die Mineralsäuren, z.B. Schwefelsäure, Phosphorsäure, Salzsäure und Salpetersäure,
sowie verschiedene Salze dieser Säuren, die von Ammonium
und Schwermetallen, z.B. Eisen oder Zink, abgeleitet
werden können, sowie Lewis-Säuren, organische Säuren,
z.B. Toluolsulfonsäure, Benzolsulfonsäure und Methylensulfonsäuren, Phthalsäure und Dicarbonsäuren, z.B.
Maleinsäure.

Die Menge des Härtungsmittels, die eingesetzt wird, sollte ausreichen, um das oder die den Furanring enthaltenden Monomeren und gegebenenfalls das Comonomere unter Bildung des Kondensationsproduktes zu härten. Die einzusetzende Menge des Härtungsmittels in Form der Säure liegt bei etwa 0,01 bis 10 Gew.-% oder mehr, bezogen auf das Gewicht der den Furanring enthaltenden Monomeren, wobei die minimale Menge lediglich von einer ausreichenden Härtung abhängt.

Die Abfallprodukte, die zur Bildung der erfindungsgemäßen Formkörper eingesetzt werden können, stellen nicht mehr verwendbare Endprodukte chemischer oder technischer Verfahren dar, die als Recycling-Produkte in eine wiederverwendbare Form und/oder als Gift- oder Sondermüll in eine gefahrlos transportier- und lagerfähige Form gebracht werden sollen. Beispiele für diese Abfallprodukte sind Kohlenstaub, Lavaasche, Flugasche, zerkleinertes Gummi oder Gummimehl, das aus verworfenen Gummireifen erhalten werden kann, Rückstände der Kohlegewinnung, zerkleinerte Kunststoffe, Industriegips, Schädlingsbekämpfungsmittel oder Rückstände aus deren Herstellung. Der Anteil der Abfallprodukte, der eingesetzt wird, kann so bemessen sein, daß die Menge des Kondensationsproduktes 0,1 bis 99 Gew.-%, vorzugsweise 2 bis 90 Gew.-%, insbesondere 10 bis 50 Gew.-%, des Ausgangsgemisches ausmacht.

Weitere Beispiele für Abfallprodukte, die zur Bildung der erfindungsgemäßen Formkörper eingesetzt werden können, sind Abfälle pflanzlichen und tierischen Ursprungs, wie Stroh, Spelze, Spelzen- und Getreidestaub aus Mahl- und Schälmühlen und Getreidesilos, Rüben-

schnitzel und Rübenschwänze aus der Zuckerindustrie, Tabakstaub, -grus, -rippen und -schlamm aus der Tabakverarbeitung, Malztreber, Malzkeime, Malzstaub, Ausputz- und Schwimmgerste aus Brauereien und Mälzereien, Fabrikationsrückstände von Kaffee, Hefe und hefeähnlichen Rückstände, Ölsaatenrückstände, Zentrifugenschlamm aus Molkereien, Bleicherde, Borsten- und Hornabfälle, Knochenabfälle und Hautreste, Federn, Lederabfälle aus Chromgerbereien, Lederschleifschlamm und Ledermehl, Rinden, Schwarten, Spreissel, Sägemehl und Sägespäne, Holzschleifstäube und -schlämme, Schlämme aus der Zellstoff-, Papier- und Kunstseidefabrikation, Schnitt- und Stampfabfälle aus der Papier- und Pappeverarbeitung, Papierklischees und Makulatur, Gelatinestanzabfälle und Seifenunterlaugen; Abfälle mineralischen Ursprungs und von Veredelungsprodukten, wie Hütten- und Gießereischutt, Dolomit und Chrommagnesit aus den Öfen der Metallerzeugung, Kupolofenschlacke, Schlacken aus NE-Metallschmelzen, gesindertes Eisenoxid, Zinkschlacke, Zinn- und Bleiaschen, eisenmetallhaltige Filterstäube, Hochofenschlacken der Eisen- und Stahlerzeugung, Braunkohlenasche, Schlacken und Aschen aus Müllverbrennungsanlagen, Flugaschen und Stäube aus Müllverbrennungsanlagen, Gießerei-Altsand, Putzereisand, Strahlsand, Kalksteinsand, Glasvliesabfälle, Keramikabfälle, Glasabfälle, Bauschutt, Straßenaufbruch, Bodenaushub vom Hoch- und Tiefbau, Asbestzementabfälle, Asbestzementstäube, Waschberge, Schamotte, Formlehm, Mineralfaserabfälle, Aktivkohleabfälle, Gesteinsstäube, Polierstäube, Feinstaub aus der Schlackenaufbereitung, Rußfüllstoffreste, Kiesabbrände, ölverunreinigter oder auf sonstige Weise verunreinigter Boden, Formsand oder Kernsand aus Gießereien, verbrauchte Ölbinder, verunreinigte Mineralfaserabfälle, Graphitabfälle, -staub und -schlamm, Glas-und Keramikabfälle, verbrauchte Filter- und Aufsaugmassen (Kieselgur, Aktiverden und Aktivkohle), Asbestabfälle, Asbeststäube, Gipsabfälle, mineralische Schlämme aus der Beton-, Zement-, Kalksandstein- und Fertigmörtelherstellung, Steinschleifschlamm, Filterschlamm
aus der Bleicherdeherstellung, Tonsuspensionen, Rotschlamm aus der Aluminiumerzeugung, Emailleschlamm,
Emailleschlicker, Graphitschlamm, Kalkschlamm, Gipsschlamm, Schlämme aus Eisenhütten, Stahlwalzwerken und
Gießereien, Glasschleifschlamm, Carbitschlamm, Gichtgasschlamm, Magnesiumoxidschlämme, Dicalciumphosphatschlämme, Eisenoxidschlämme aus Reduktionen, Erdschlämme,
Sandschlämme, Schlämme aus der NE-Metallurgie, Aluminiumoxidschlämme, cyanidhaltige, nitrat- und nitrithaltige Härtereischlämme, Bariumcarbonatschlamm, Bariumsulfatschlämme, Carbonatationsschlamm und Rübenerde
aus der Zuckerindustrie, verunreinigte Bohrschlämme
von Tiefbohrungen, Phosphatierschlamm und Calciumsulfitschlamm; Metallabfälle wie eisenhaltiger Staub, Schrott,
Schnitt-, Stanz-, Dreh-, Bohr- und Hobelabfälle von
Eisen, Stahl und NE-Metallen, Abfälle von Blei, Hartzink,
Aluminium, Alufolien, Magnesium und Zink, Elektronspäne,
Berylliumspäne, Zinkplatten, Andruckplatten, Zündsteinabrieb, NE-Metallschrott, bleihaltige, aluminiumhaltige,
berylliumhaltige, magnesiumhaltige, zinkhaltige und
NE-metallhaltige Stäube, Zinkschlamm, Metallschleifschlamm, Bleischlamm, Zinnschlamm, Trowalschlamm, Jarositschlamm, Steinsalzrückstände (Gangart), Gasreinigungsmassen, Feuerlöschpulverreste und Skoroditschlamm; Abfälle chemischer Umwandlungs- und Syntheseprodukte, wie
Galvanikschlämme, die Cyanid, Chrom-(VI), Chrom-(III),
Kupfer, Zink, Cadmium, Nickel, Cobalt und Edelmetalle
enthalten, Zinkoxid, Zinkhydroxid, Zinnstein, Braunstein, Manganoxide, Aluminiumoxid, Chrom-(III)-oxid,
Kupferoxid, Aluminiumhydroxid, Eisenhydroxid, Häutesalze, Natrium- und Kaliumphosphatabfälle, Imprägniersalzabfälle, Salzbadabfälle aus Wärmebädern und Salzschmelzen zur Wärmeübertragung, Ammoniumbifluorid, Arsenkalk, Arsentrisulfid, Kesselstein, Brüniersalzabfälle, Natriumsulfat, Natriumbromid, Eisenchlorid, Eisensulfat, Bleisulfat, Natriumchlorid, Bleisalze, Bariumsalze, Calciumchlorid, Magnesiumchlorid, Alkali- und Erdalkalisulfide, Schwermetallsulfide, Kupferchlorid, Aluminiumsulfat, Chlorkalk, Härtesalze, die Cyanid, Nitrat und Nitrit enthalten, Vanadiumsalze, Abraumsalze vom Bergbau, Grünsalz, Säuren, Säuregemische und Säurebeizen aus der Oberflächenbehandlung von Metallen usw. sowie Sulfitablaugen; Abfälle von Pflanzenbehandlungs- und Schädlingsbekämpfungsmitteln, wie Altbestände und Produktionsabfälle von Pflanzenbehandlungs- und Schädlingsbekämpfungsmitteln; Abfälle von pharmazeutischen Erzeugnissen, wie Altmedikamente und Produktionsabfälle von pharmazeutischen Erzeugnissen; Abfälle von Mineralölprodukten aus der Erdölverarbeitung und Kohleveredelung, wie saure Ölabfälle, Metallseifen und Bitumenemulsionen; Rückstände aus der Mineralölraffination, wie mineralölhaltige Bleicherde, Säureharze und Säureteere, Schlämme aus der Mineralölraffination, Rohschwefel, Säureharz-Aufbereitungs-Rückstände und mineralölhaltige Abfallsäuren; phenolhaltiger Schlamm, mercaptanhaltiger Schlamm, Anthracenrückstände, naphthalinhaltige Rückstände, phenolhaltige Rückstände, Pellets aus der Ölvergasung, Schlamm aus Kokerei- und Gaswerknaßentstaubern, Pechabfälle, Bitumenkoks, Bitumenabfälle, Asphaltabfälle, Teerrückstände, Brikettpech, Destillationsrückstände aus der Teerölproduktion, Steinkohlenteerrückstände, festes Dichtungsmaterial und Unterbodenschutzabfälle, Phenolwasser und Petrolkoks; Lösungsmittel, wie Dimethylformamid, Dimethylsulfid, Dimethylsulfoxid, aromatische Amine und Kresole; Abfälle von Leim- und Klebemitteln, Kitt- und Spachtelmassen; Kunststoff- und Gummiabfälle wie Abfälle von Phenol und Melaminharzen, Polyestern, Gießharzen, Imprägnierharzen, Folien, Polyethylen, härtbare Formmassen, Polystyrol, Vulkanfiber, Polyurethan, Polyamid, Hartschaum, Kunstdärmen, Filmen und Celluloid, Polyvinylchlorid, Kunstglas, Polyvinylacetat, Polyvinylalkohol, Polyvinylacetal und Epoxiden, Kunststoffemballagen, verunreinigte Kunststoff-Folien, Ionenaustauscherharze, Fabrikationsrückstände aus der Kunststoffherstellung und -verarbeitung, lösungsmittelfreie und lösungsmittelhaltige Kunststoffschlämme, Kunststoffdispersionen, Kunststoffemulsionen, Gummiabfälle, Altreifen und Altreifenschnitzel, Gummi-Asbest-Abfälle, Gummi-Metall-Abfälle, Latexschaumabfälle, Gummimehl, Gummigranulat, Altlatex, Latex-Schlämme, Latex-Emulsionen, Kautschuklösungen und Gummischlämme; Textilabfälle, wie Abfälle von Polyamidfasern, Polyesterfasern, Polyacrylfasern, Cellulosefasern und Wolle sowie Wäschereischlämme; flüssige und feste Tenside, Sulfoseifen, Sulfonsäuren, Katalysatoren, radioaktive Abfälle aus Laboratorien und Krankenhäusern, sowie sonstigen Einrichtungen des medizinischen Bereiches, Baustellenabfälle, Sedimentationsschlämme aus der Wasseraufbereitung sowie Schlämme aus der Gewässerreinigung; sowie Schlämme der Eisenfällung und Manganfällung aus der Wasseraufbereitung.

Je nach den eingesetzten Abfallprodukten muß die Temperatur der Umsetzung so niedrig gehalten werden, daß keine giftigen Gase entstehen. Die Temperatursteuerung des Verfahrens kann mit Hilfe von Wasserkühlung oder durch Anwendung verdünnter Säuren erreicht werden.

Die erfindungsgemäßen Formkörper können vielfach verwendet werden, beispielsweise in Form von Platten mit Sand gemischt im Straßenbau oder auch als Baustoffe im
Wohnungsbau für Estriche oder Wände.

Eine vorteilhafte Anwendungsmöglichkeit erhalten besonders solche Formkörper, die als Abfallprodukte mindestens teilweise zerkleinertes Gummi oder Gummimehl
enthalten, aufgrund ihrer hohen Dielektrizitätskonstante
als elektrische Isolierkörper und Isoliermaterialien.
Derartige Isoliermaterialien sind nicht brennbar und
geben keine Rauchgase ab. Sie können 1 bis 90 Gew.-%,
vorzugsweise 1 bis 75 Gew.-% zerkleinertes Gummi bzw.
Gummimehl enthalten. Auch gemahlenes Glas kann in Mengen
bis zu 75 Gew.-%, bezogen auf das Gummimehl, zugesetzt
werden.

Erfindungsgemäße Formkörper, die als Isolierkörper verwendet werden, haben nicht nur die gewünschte hohe Dielektrizitätskonstante, die sie zur Isolierung von
Hochspannungsleitungen geeignet macht, sondern besitzen
zusätzlich die Eigenschaft, fest zu sein, ohne die Sprödigkeit bisheriger Isolierkörper aus Porzellan aufzuweisen. Gegenüber den bisherigen Isolierkörpern aus
Porzellan haben also die erfindungsgemäßen Isolierkörper
den Vorteil, daß sie nicht wie diese leicht zerbrechen
oder auch nur Haarrisse erhalten können, die ihre Brauchbarkeit verringern, wenn nicht sogar zerstören.

Es wurde auch gefunden, daß gefährliche Abfallstoffe,
wie Schädlingsbekämpfungsmittel, z.B. Kepone[R] oder
polychlorierte Biphenyle, zu festen Blöcken jeder Größe
und Form verarbeitet werden können, wenn sie in die erfindungsgemäßen Formkörper eingearbeitet werden. Es können 1 bis etwa 50 Gew.-% oder mehr, bezogen auf das
Kondensationsprodukt, aus den gefährlichen Abfallstoffen
bestehen, wobei die Konzentration so gewählt werden muß,

daß die gefährlichen Abfallstoffe vor den Elementen geschützt sind und aus dem Fertigprodukt in Gegenwart von Feuchtigkeit nicht mehr herauszulösen oder auszulaugen und damit in diesem Endzustand ungefährlich sind. Auf diese Weise kann ein fester zusammenhängender Block oder eine andere Form gebildet werden, die sicher zu einem Standort einer dauernden Beseitigung, beispielsweise durch Vergraben oder Verbrennen, transportiert werden kann. Zur Unterstützung der Pyrolyse der gefährlichen Abfallstoffe können die Verbrennung fördernde Hilfsmittel, z.B. Kohlenstaub, in den Formkörper eingebracht werden.

Wenn ein verschäumter Formkörper hergestellt werden soll, können dem Ausgangsgemisch als mit der Säure zusammenwirkender Treibmittelbestandteil in einer Menge von 0,001 bis 50 Gew.-%, bezogen auf das Gewicht des gesamten Gemisches, feinteiliges Aluminium, Magnesium oder Schwermetall oder Glas zugesetzt werden. Diese verschäumten Formkörper weisen ebenfalls sehr gute Wärme- und elektrische Isoliereigenschaften auf. Als Schwermetall kommen für den Treibmittelbestandteil z.B. Eisen oder Zink infrage. Überraschenderweise wurde auch gefunden, daß zum Verschäumen der Masse unter Einwirkung der Säure auch Glas, z.B. in Form von Glasfasern, eingesetzt werden kann. Der Treibmittelbestandteil kann auch aus einem Abfallprodukt bestehen. Das Treibmittel aus Säure und Metall oder Glas ist in der Lage, das Gesamtvolumen des Ausgangsgemisches auf das 2- bis 8-fache zu expandieren, wodurch ein leichteres, weniger dichtes Material mit ausgezeichneten Isoliereigenschaften erhalten wird.

Die erfindungsgemäßen Formkörper lassen sich je nach der Art des eingesetzten Abfallproduktes in jeder Größe oder Form herstellen. Wenn z.B. Kohle und Kohlerückstän-

ve, Glas und Flugasche als Abfallprodukte verwendet werden, die noch gerüttelt werden können, so entstehen strukturell feste Produkte, während Produkte, die mit gemahlenem Gummi hergestellt wurden, in sich eine begrenzte Elastizität aufweisen und nicht spröde sind.

Das Verfahren der vorliegenden Erfindung besteht im allgemeinen darin, daß man die Bestandteile in keiner besonderen Reihenfolge miteinander vermischt, abgesehen davon, daß das oder die den Furanring enthaltenden Monomeren mit der Säure reagieren, und diese daher noch nicht in das Vorgemisch eingeführt werden sollte. Im allgemeinen werden die den Furanring enthaltenden Monomeren mit dem Abfallprodukt vermischt, und anschließend wird die Säure zugesetzt. Das fertige Gemisch kann in eine Form gebracht und zu der gewünschten Form und Größe geformt werden.

Zur Bildung des verschäumten Formkörpers der vorliegenden Erfindung hat sich die Reihenfolge des Vermischens als bedeutsam erwiesen. Zuerst wird das Abfallprodukt, gegebenenfalls zusammen mit einem Füllstoff, z.B. Sand oder Waschberge, mit der Säure bzw. dem Härtungsmittel vermischt, wobei vorzugsweise ein Überschuß der Säure im Vergleich zu der Menge, die allgemein zur Katalyse der Kondensation erforderlich ist, eingesetzt wird. Dieses erste Gemisch wird mit dem den Furanring enthaltenden Monomeren vermischt, wobei vorzugsweise gleichzeitig der weitere Treibmittelbestandteil zugesetzt wird, der auch mit dem den Furanring enthaltenden Monomeren vorgemischt worden sein kann. Unter beständigem Rühren wird eine unmittelbare Reaktion und ein Verschäumen auf das 2- bis 20-fache des Volumens des ursprünglichen Gemisches erreicht.

Die verschäumten Formkörper der vorliegenden Erfindung
können in Form druckfester Schäume oder von Strukturschäumen ebenfalls als Isolier- und Baustoffe, z.B.
für Balken, verwendet werden. Sie können auch zur Herstellung von Möbeln eingesetzt werden. Eine besondere
Anwendungsform sind Hitzeschilder für Raketen, die
stabiler als solche aus Phenolharzen sind. Für diesen
Zweck können den Ausgangsgemischen auch Phenolharze zugesetzt werden. Die erfindungsgemäßen verschäumten Formkörper können auch zur Glasfaserverstärkung oder zur Oberflächenbeschichtung , eingesetzt werden. Eine weitere
Verwendungsmöglichkeit der unverschäumten oder verschäumten Formkörper der Erfindung besteht darin, sie
als Schutzummantelung für Behälter, die mit gefährlichen
Stoffen gefüllt sind, einzusetzen, um diese sicherer
zu transportieren und/oder zu lagern. Auf diese Weise
können z.B. Fässer, die radioaktives Material enthalten,
ummantelt werden, um eine zusätzliche Sicherheit zu erreichen.

Die Erfindung wird durch die folgenden Beispiele näher
erläutert.


Beispiel 1

Es wurde ein Gemisch aus 2000 g Furfurylalkohol, 10 g
85%iger Phosphorsäure in 200 g Wasser und 2000 g Flugasche hergestellt, wobei keine Wärme angewendet zu werden
brauchte. Das Reaktionsgemisch ließ sich in Blockform
gießen. Nach Abschluß der Umsetzung wurde die Blockform
geöffnet, wobei ein Block mit guten Isoliereigenschaften
erhalten wurde, der für Bauzwecke geeignet war. Die
gleichen Ergebnisse wurden mit Abfallkohle und gemahlenem
Gummi erhalten.

Beispiel 2

Die Arbeitsweise von Beispiel 1 wurde wiederholt, wobei jedoch zusätzlich  Formaldehyd in einer Menge von 1 000 g zugesetzt wurde.

Beispiel 3

Die Arbeitsweise von Beispiel 1 wurde wiederholt, wobei jedoch anstelle der Flugasche Kepone[(R)] (Decachlor-octa-hydro-1,3,4-metheno-2H-cyclobuta-$\underline{c}$,$\underline{d}$-pentalen-2-on) verwendet wurde. Das erhaltene Produkt wurde in Gegenwart von Feuchtigkeit nicht ausgelaugt oder gelöst, und ließ sich sicher transportieren, ohne daß Kepone[(R)] verlorenging.

Beispiel 4

Die Arbeitsweise von Beispiel 1 wurde wiederholt, wobei jedoch zuerst der Furfurylalkohol und die Flugasche miteinander vermischt wurden. Die Phosphorsäure in einer Menge von 20 g 85%iger Säure wurde getrennt mit 10 g Aluminiumpulver gemischt. Die beiden Gemische wurden bei Umgebungstemperatur miteinander vereinigt, wobei ein Schaumstoff erhalten wurde, dessen Volumen um 600 % größer als das Volumen der ursprünglichen Masse war.

Beispiel 5

Die Arbeitsweise von Beispiel 4 wurde wiederholt, wobei jedoch zusätzlich 200 g Formaldehyd als Comonomeres zur Kondensation mit dem Furfurylalkohol zugesetzt wurden. Das Produkt verschäumte auf gleiche Weise wie das Produkt des Beispiels 4.

Dieses Produkt besaß ein großes Wärmeisoliervermögen, war beständig gegenüber einer Acetylenflamme von etwa 1930°C und besaß einen hohen R-Wert als Isolierfaktor.

## Beispiele 6 bis 20

Es wurden Gemische aus Furfurylalkohol, 60%iger Phosphorsäure und Eisensulfat aus Beizerei-Rückständen hergestellt, wobei das Verhältnis von Phosphorsäure zu Furfurylalkohol variiert wurde. Dabei wurden die folgenden Beobachtungen gemacht:

| Beispiel Nr. | 60%ige $H_3PO_4$ ml | Furfurylalkohol ml | Eisensulfat aus Beizerei-Rückständen | Reaktionsdauer | Beobachtungen |
|---|---|---|---|---|---|
| 6 | 10 | 10 | 2 g | sofort | Sieden |
| 7 | 20 | 10 | " " | " | Sieden |
| 8 | 30 | 10 | " " | " | Sieden |
| 9 | 40 | 10 | " " | " | Sieden |
| 10 | 50 | 10 | " " | " | Sieden |
| 11 | 60 | 10 | " " | 5 Sek. | gleichmäßige Reaktion |
| 12 | 70 | 10 | " " | 5 Sek. | gleichmäßige Reaktion |
| 13 | 80 | 10 | " " | 20 Sek. | gleichmäßige Reaktion mit geringer Wärmeentwicklung |
| 14 | 90 | 10 | " " | 24 Std. | Reaktion nach 24 Std. |
| 15 | 100 | 10 | " " | 24 Std. | Reaktion nach 24 Std. |
| 16 | 10 | 20 | " " | 35 Sek. | spontane Reaktion mit Aufschäumen |
| 17 | 10 | 30 | " " | 70 Sek. | hohe Temperaturentwicklung mit Aufschäumen |
| 18 | 10 | 40 | " " | 80 Sek. | hohe Temperaturentwicklung mit Aufschäumen |

| Beispiel Nr. | 60%ige $H_3PO_4$ ml | Furfurylalkohol ml | Eisensulfat aus Beizerei-Rück- ständen | Reaktions- dauer | Beobachtungen |
|---|---|---|---|---|---|
| 19 | 10 | 50 | 2 g | 100 Sek. | hohe Temperaturent- wicklung mit Auf- schäumen |
| 20 | 10 | 60 | " " | 100 Sek. | hohe Temperaturent- wicklung mit Auf- schäumen und Faden- bildung |

### Beispiel 21

10 ml Furfurylalkohol wurden mit 3 g trockenem Ledermehl aus der Lederherstellung vermischt und reagierten
bei Zusatz von 10 ml 20%iger Natronlauge innerhalb von
15 Sek. Es erfolgte eine sofortige Verfärbung nach
hellbraun. In der Hitze wurde das Produkt gelb.

### Beispiel 22

10 ml Furfurylalkohol wurden mit 3 g trockenem Ledermehl vermischt. Bei Zugabe von 10 ml 25%iger Salzsäure
erfolgte eine sofortige Reaktion.

### Beispiel 23

10 ml Furfurylalkohol wurden mit 3 g trockenem Ledermehl und 10 ml 65%iger Salpetersäure vermischt. Es erfolgte nach wenigen Sekunden eine explosionsartige Aufschäumungsreaktion.

### Beispiel 24

10 ml Furfurylalkohol wurden mit 3 g trockenem Ledermehl und 10 ml 20%iger Salpetersäure vermischt. Auch
hier erfolgte nach wenigen Sekunden eine stürmische
Reaktion.

### Beispiel 25

10 ml Furfurylalkohol wurden mit 3 g trockenem Ledermehl und 10 ml konz. wäßriger Lösung von p-Toluolsulfonsäure vermischt. Es erfolgte eine spontane stürmische Reaktion. Es bildete sich ein schwarzes Kondensationsprodukt.

Beispiel 26

10 ml Furfurylalkohol wurden mit 3 g trockenem Ledermehl und 10 ml einer konz. wäßrigen Oxalsäure vermischt. Die Masse reagierte sofort bei Wärmezufuhr.

Beispiel 27

10 ml Furfurylalkohol wurden mit 3 g trockenem Ledermehl und 10 ml einer konz. wäßrigen Phthalsäurelösung vermischt. Die Masse reagierte bei Wärmezufuhr sofort.

Beispiele 28 bis 35

Es wurden Gemische aus Furfurylalkohol, Gummimehl aus der Reifenherstellung und Schwefelsäure oder Phosphorsäure hergestellt, wobei die Säurekonzentrationen (jeweilige Konzentrationen der sauren Lösung) variiert wurden. Dabei wurden die folgenden Beobachtungen gemacht:

| Beispiel Nr. | Furfuryl-alkohol ml | Gummimehl aus der Reifen-herstellung | Säure ml | Beobachtungen |
|---|---|---|---|---|
| 28 | 10 | 2 g | 10 ml 96%ige $H_2SO_4$ | sofortige Reaktion |
| 29 | 10 | 2 g | 10 ml 60%ige $H_2SO_4$ | sofortige Reaktion |
| 30 | 10 | 2 g | 10 ml 40%ige $H_2SO_4$ | Reaktion nach 5-10 Sek. |
| 31 | 10 | 2 g | 10 ml 20%ige $H_2SO_4$ | Reaktion nach 180 Sek. |
| 32 | 10 | 2 g | 10 ml 85%ige $H_3PO_4$ | sofortige Reaktion |
| 33 | 10 | 2 g | 10 ml 60%ige $H_3PO_4$ | Reaktion nach 10 Sek. |
| 34 | 10 | 2 g | 10 ml 40%ige $H_3PO_4$ | Reaktion nach 120 Sek. |
| 35 | 10 | 2 g | 10 ml 20%ige $H_3PO_4$ | Reaktion nach 780 Sek. |

In diesen Versuchen zeigte sich, daß bei Verwendung von Schwefelsäure und Phosphorsäure die Reaktionszeit bei Säurekonzentrationen zwischen 10 und 70 % verlängert war und die Produkte nicht mehr wie bei höheren Konzentrationen schwarz, sondern grün waren.

Beispiel 36

750 ml Harnstoff-Formaldehyd-Harz, 250 ml Furfurylalkohol, 6 g Aluminiumpulver und 80 g Holzasche wurden mit 1000 ml 60%iger Phosphorsäure vermischt. Die Reaktion begann nach 2 Minuten 30 Sek. Die Temperatur stieg von 22 auf 35°C. Nach 3 Min. 30 Sek. stieg die Temperatur schnell auf 85°C an. Es bildete sich ein brauner Schaum.

Beispiel 37

Es wurde ein erstes Gemisch aus 1000 ml einer 75%igen Phosphorsäure und 50 ml an Rückständen des Spülmittels Spüli hergestellt. Sodann wurde ein zweites Gemisch aus 750 ml eines Harnstoff-Formaldehydharzes, 250 ml einer Lösung, die auf 100 Teile 40 Teile Furfurylalkohol, 5 Teile Formaldehyd und 5 Teile Harnstoff enthielt, sowie 4 g Aluminiumpulver hergestellt. Beim Vermischen der beiden Gemische wurde ein Schaumstoff erhalten.

Beispiel 38

Die Arbeitsweise von Beispiel 37 wurde wiederholt, wobei jedoch anstelle der 50 ml 150 ml an Rückständen des Spülmittels Spüli und anstelle der 4 g 6 g Aluminiumpulver eingesetzt wurden. Es wurde auch in diesem Fall ein Schaumstoff erhalten.

**Beispiel 39**

Die Arbeitsweise von Beispiel 37 wurde wiederholt, wobei jedoch dem zweiten Gemisch zusätzlich 150 g ungereinigte Gipsabfälle (aus der chemischen Industrie) zugesetzt wurden. Es bildete sich ein harter, unbrennbarer Schaum.

**Beispiel 40**

Es wurde ein Gemisch aus 10 g einer etwa 70%igen wäßrigen Lösung von Karamel-Rückständen und 8 ml 85%iger Schwefelsäure hergestellt. Die Temperatur des Gemisches stieg von 21 auf 31°C. Anschließend wurde das Gemisch zum Sieden erhitzt, wobei sich die Lösung schwarz färbte. Bei Zugabe von 5 Tropfen Furfurylalkohol wurde die Lösung fest.

**Beispiel 41**

Es wurde ein Gemisch aus 7 ml 85%iger Phosphorsäure, 6 ml an Rückständen des Spülmittels Spüli, 20 ml Sand, 20 ml Toluylendiisocyanat (Polyurethanharz) und 20 ml Furfurylalkohol hergestellt. Es bildete sich ein Schaum, der um 500 % aufschäumte und nicht brannte.

**Beispiel 42**

Die Arbeitsweise von Beispiel 41 wurde wiederholt, wobei jedoch anstelle des Toluylendiisocyanats 20 ml eines Phenolharzes eingesetzt wurden. Die maximale Reaktionstemperatur betrug 95°C. Es bildete sich ein Schaum, der um 300 % aufschäumte und nicht brannte.

Beispiel 43

Es wurde ein Gemisch aus 1200 g Flugasche, 86 g 85%iger Phosphorsäure und 70 g Furfurylalkohol hergestellt. Es bildete sich nach 30 Minuten ein festes Produkt, das sich sehr gut verarbeiten ließ.

Beispiel 44

Es wurde ein Gemisch aus 1200 g Flugasche, 70 g 85%iger Phosphorsäure und 50 g Furfurylalkohol hergestellt. Nach zwei Stunden hatte sich ein festes Produkt gebildet. Dieses Produkt ließ sich bei der verzögerten Reaktionsdauer sehr gut verarbeiten, z.B. stampfen.

Beispiel 45

Es wurde ein Gemisch aus 1000 g Flugasche, 150 g 85%iger Phosphorsäure, 78 g Furfurylalkohol und 10 g Eisenchloridlösung hergestellt. Daraus wurden unter Stampfen 750 g eines festen Produktes (als Blocksubstanz) erhalten.

Beispiel 46

Es wurde ein Gemisch aus 50 g Flugasche, 40 g Industriegipsabfall, 30 ml 85%iger Phosphorsäure und 10 ml Furfurylalkohol hergestellt. Man erhielt eine feste Masse

Beispiel 47

Es wurde ein Gemisch aus 100 g Furfurylalkohol, 10 g Harnstoff, 40 g Industriegipsabfall und 10 ml 30%iger Salzsäure hergestellt. Die Mischungsbestandteile reagierten spontan miteinander und ergaben eine feste Masse.

0001639

Beispiel 48

Es wurde ein Gemisch aus 1000 g Furfurylalkohol und
2000 g Flugasche hergestellt, das nach gutem Durchmischen mit 100 ml 25%iger Phosphorsäure versetzt und
nochmals gut durchgemischt wurde. Das Produkt ließ
sich gießen und erstarrte sodann in Blockform.

0001639

## Patentansprüche

1. Formkörper auf der Grundlage von Furanharzen in kompakter oder verschäumter Form, erhalten durch inniges Vermischen eines oder mehrerer Monomerer, die mindestens teilweise einen Furanring enthalten, mit einem sauren Härtungsmittel und einem oder mehreren Abfallprodukten, die nicht mehr verwendbare Endprodukte chemischer oder technischer Verfahren oder Verwitterungsprodukte darstellen, sowie gegebenenfalls feinteiligem Aluminium, Magnesium, Schwermetall oder Glas als Treibmittelbestandteil.

2. Formkörper nach Anspruch 1, dadurch gekennzeichnet, daß die Menge des oder der Monomeren 2 bis 90 Gew.-% des Ausgangsgemisches beträgt.

3. Formkörper nach Anspruch 2, dadurch gekennzeichnet, daß die Menge des oder der Monomeren 10 bis 50 Gew.-% des Ausgangsgemisches beträgt, wobei die Menge des oder der Comonomeren 0,1 bis 50 Gew.-% der Monomeren ausmacht.

4. Formkörper nach einem der Ansprüche 1 bis 3, dadurch gekennzeichnet, daß er als einen Furanring enthaltende Monomere Furfurylalkohol und/oder Furfural, gegebenenfalls im Gemisch mit Pentosen und/oder Hexosen, insbesondere Dextrose, enthält.

5. Formkörper nach einem der Ansprüche 1 bis 4, dadurch gekennzeichnet, daß zu seiner Herstellung als saures Härtungsmittel eine anorganische Säure oder eines ihrer Salze, eine Lewis-Säure, ein Acylhalogenid, eine organische Säure oder eines ihrer Salze oder ein Gemisch derartiger Verbindungen, insbesondere Schwefelsäure, Phosphorsäure oder Toluolsulfonsäure verwendet wird.

6. Formkörper nach einem der Ansprüche 1 bis 5, dadurch gekennzeichnet, daß er als Comonomeres Aldehyde, Phenole oder Ketone, insbesondere Formaldehyd oder Aceton, und/oder Harnstoff enthält.

7. Formkörper nach einem der Ansprüche 1 bis 6, dadurch gekennzeichnet, daß zu seiner Herstellung in verschäumter Form 0,001 bis 20 Gew.-%, bezogen auf das Ausgangsgemisch., an feinteiligem Aluminium, Magnesium oder Schwermetall oder 1 bis 50 Gew.-%, bezogen auf das Ausgangsgemisch, an feinteiligem Glas verwendet werden.

8. Formkörper nach einem der Ansprüche 1 bis 7, dadurch gekennzeichnet, daß er als Abfallprodukte in einer Menge von 1 bis 90 Gew.-%, bezogen auf das Ausgangsgemisch, zerkleinerte Kohlerückstände, zerkleinertes Gummi, zerkleinerte Kunststoffe, Schädlingsbekämpfungsmittel oder Rückstände aus deren Herstellung und/oder Industriegips, insbesondere Flugasche, Lavaasche, Kohlenstaub, zerkleinerte Gummireifen, das Biocid Kepone[R] (Decachlor-octahydro-1,3,4-metheno-2H-cyclobuta-[c,d]-pentalen-2-on) und/oder polychlorierte Biphenyle enthält.

9. Formkörper nach einem der Ansprüche 1 bis 6 oder 8, dadurch gekennzeichnet, daß zu seiner Herstellung in verschäumter Form das oder die Monomeren, die mindestens teilweise einen Furanring enthalten,

0001639

im Überschuß gegenüber dem sauren Härtungsmittel verwendet werden.

10. Verfahren zur Herstellung eines verschäumten Formkörpers nach einem der Ansprüche 1 bis 8, dadurch gekennzeichnet, daß man zunächst unter Bildung eines ersten Cemisches das Abfallprodukt mit einer zum Härten des oder der Monomeren ausreichenden Menge des sauren Härtungsmittels mischt, sodann durch Zugabe des oder der mindestens teilweise einen Furanring enthaltenden Monomeren in einer zum Härten der Masse ausreichenden Menge zu dem ersten Gemisch ein zweites Gemisch bildet, wobei vor dem Härten der Masse als Treibmittelbestandteil feinteiliges Aluminium, Magnesium oder Schwermetall oder Glas zugesetzt wird, um das zweite Gemisch zu verschäumen, und das zweite Gemisch unter Bildung eines gehärteten verschäumten Produktes verschäumt und formt.

11. Verwendung eines Formkörpers nach einem der Ansprüche 1 bis 6, der als Abfallprodukt mindestens teilweise zerkleinertes Gummi enthält, als elektrisches Isoliermaterial.

12. Verwendung eines Formkörpers nach einem der Ansprüche 1 bis 9 als Schutzummantelung für mit gefährlichen Stoffen gefüllte Behälter.

0001639

**Europäisches Patentamt**

**EUROPÄISCHER RECHERCHENBERICHT**

Nummer der Anmeldung
EP 78 10 1191

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 152 956 (KONINKLIJKE EMBALLAGE INDUSTRIE) <br><br> * Ansprüche 1,3; Seite 4, Zeilen 34-37 * | 1-12 |
| | FR - A - 2 250 796 (WILMSEN HAUS) <br><br> * Ansprüche 1,23,24 * | 1-12 |
| | DE - B - 1 289 658 (SOCIETE D'ELEC-TRO-CHIMIE) <br><br> * Anspruch * | 1,8 |
| | FR - A - 2 224 512 (BRITISH INDUS-TRIAL PLASTICS) <br><br> * Ansprüche 1,4,5 * | 1,8 |
| | FR - A - 2 197 045 (KONINKLIJKE EMBALLAGE INDUSTRIE) <br><br> * Ansprüche * | 1 |

**KLASSIFIKATION DER ANMELDUNG (Int.Cl.²)**

C 08 J 9/00

**RECHERCHIERTE SACHGEBIETE (Int. Cl.²)**

C 08 J 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-01-1979 | DECOCKER |

EPA form 1503.1  06.78